(19) **Europäisches Patentamt**

**European Patent Office**

**Office européen des brevets**

(11) **EP 0 781 877 B1**

(12) **EUROPÄISCHE PATENTSCHRIFT**

(45) Veröffentlichungstag und Bekanntmachung des Hinweises auf die Patenterteilung:
**17.07.2002   Patentblatt 2002/29**

(51) Int Cl.⁷: **D01D 5/088**, D01D 4/06, D01D 5/08

(21) Anmeldenummer: **96118669.9**

(22) Anmeldetag: **21.11.1996**

(54) **Schmelzespinnvorrichtung**

Melt-spinning apparatus

Dispositif pour le filage au fondu

(84) Benannte Vertragsstaaten:
**CH DE FR GB IT LI**

(30) Priorität: **30.11.1995  DE 19544662**

(43) Veröffentlichungstag der Anmeldung:
**02.07.1997   Patentblatt 1997/27**

(60) Teilanmeldung:
**01103488.1 / 1 122 343**

(73) Patentinhaber: **RIETER AUTOMATIK GmbH
D-63762 Grossostheim (DE)**

(72) Erfinder:
• **Glawion, Erwin
63762 Grossostheim (DE)**

• **Kretzschmar, Willi
24536 Neumünster (DE)**

(74) Vertreter: **Canzler, Rolf, Dipl.-Ing.
Reisacherstrasse 23
85055 Ingolstadt (DE)**

(56) Entgegenhaltungen:
**EP-A- 0 517 994          WO-A-95/04173
US-A- 3 650 716**

• **PATENT ABSTRACTS OF JAPAN vol. 006, no. 143 (C-117), 3.August 1982 & JP 57 066112 A (TEIJIN LTD), 22.April 1982,**

Printed by Jouve, 75001 PARIS (FR)

**Beschreibung**

Die Erfindung betrifft eine Vorrichtung zum Extrudieren eines geschmolzenen polymeren Materials zu einer Vielzahl von Fäden, wobei diese Vorrichtung Verteilerkanäle aufweist, über die das geschmolzene Material Spinndüsen zugeführt wird, sowie Heizeinrichtungen, um den Materialfluß bis zum Austritt aus den Düsenbohrungen auf der für das Extrudieren erforderlichen Temperatur zu halten, und ferner eine Kühleinrichtung mit einer den Düsenbohrungen zugeordneten Blasdüse, die eine schlitzförmige Mündungsöffnung aufweist, die auf die aus den Düsenbohrungen austretenden Fäden gerichtet ist, so daß diese der aus der Blasdüse austretenden Luftströmung ausgesetzt sind, die die Fadenschar durchströmt.

Filamente aus fadenbildenden Polymeren wie Polyester, Polyamiden und Polyolefinen werden üblicherweise nach dem Schmelzespinnverfahren hergestellt. Bei diesem Verfahren werden die Polymere in einem Extruder aufgeschmolzen und homogenisiertund anschließend durch eine Schmelzeleitung Spinnpumpen zugeführt, die die Schmelze durch Düsenbohrungen pressen. Die aus den Spinndüsen austretenden Filamente werden durch einen Luftstrom kontinuierlich abgekühlt. Die so erzeugten Filamente werden anschließend präpariert, zu einem Kabel zusammengefaßt, verstreckt, gekräuselt und zu Stapelfasern zerschnitten.

Hierbei haben die ersten Stufen des Prozesses großen Einfluß auf die folgenden Prozeßstufen hinsichtlich der Produktqualität, so daß bereits vor oder während der Fadenbildung die endgültige Qualität der Fäden oder Stapelfasern entscheidend bestimmt wird.

Dies fängt bereits bei der Extrusion an, die eine möglichst homogene Schmelze bezüglich der Temperaturverteilung und ggfs. auch der Verteilung von Additiven liefern soll. Die Schmelzeverteilung auf die Düsenbohrungen erfolgt deshalb üblicherweise über ein exakt abgestuftes Leitungssystem mit möglichst gleichen Leitungslängen für alle Spinnpumpen. Eine gleichbleibende Temperatur wird durch eine möglichst gleichmäßige Beheizung aller Leitungsabschnitte gewährleistet. Zahnradpumpen mit frequenzgeregelten Antrieben stellen die exakte Dosierung der einzelnen Volumenströme zu den Düsenbohrungen sicher.

In der Praxis werden je nach Einsatz verschiedene Formen der Spinndüsenpakete, nämlich Rechteck-, Ring- und Runddüsenpakete verwendet, für die wiederum eine möglichst gleichmäßige Schmelzeverteilung über die gesamte Austrittsfläche der Schmelze sichergestellt sein muß.

Ein derartiges Verteilungssystem für ein Ringdüsenpaket ist beispielsweise in der EP 0 517 994 gezeigt, wo die Schmelze über ein kompliziertes System gleichlanger Kanäle zu den Düsenbohrungen eines ringförmigen Düsenpaketes geführt wird. In der US 4 259 048 ist ein Ringdüsenpaket beschrieben, bei dem die Schmelzeverteilung durch einen plattenförmigen Raum sichergestellt werden soll.

Diese Lösungen funktionieren jedoch nur dann einwandfrei, wenn alle Kanäle die gleiche Temperatur besitzen, da ansonsten sich aufgrund der Temperaturdifferenzen Unterschiede in der Fließfähigkeit der Polymere einstellen und die Schmelze nach dem Prinzip des geringsten Widerstandes bevorzugt durch die wärmeren Kanäle strömt. Dies äußert sich in deutlichen Unterschieden im Titer und wird im Endprodukt durch den Variationskoeffizienten ausgedrückt. Außerdem wird durch derartige Temperaturungleichmäßigkeiten die Verstreckbarkeit nachteilig beeinflußt, so daß hochwertige Produktqualitäten kaum hergestellt werden können. Dies trifft in besonderem Maße bei der Herstellung sehr feiner Fasern oder Filamente zu, da die mitgebrachte Enthalpie aufgrund des niedrigeren Durchsatzes geringer ist und somit sich die Temperatureinflüsse auf die Schmelzeviskosität auch aufgrund der höheren Verweilzeiten stärker auswirken.

Die Praxis hat jedoch gezeigt, daß selbst in einem mit dampfförmigem Wärmeträgeröl beheizten Gehäuse mit Aufnahmen für die Spinndüsen, dem sogenannten Spinnbalken, Temperaturunterschiede auftreten, da sich die Düsen nicht spaltlos einbauen lassen. Spalte dienen zum Ausgleich von Verformungsvorgängen beim Verquetschen von Dichtungen bzw. sind als Sicherheitsabstand erforderlich wegen der bei Prozeßtemperaturen zwischen 220 bis 300°C auftretenden Wärmedehnungen. Durch diese Spalten ist die optimalste Wärmeübertragungsart durch Wärmeleitung nur sehr eingeschränkt anwendbar.

Einen Ausweg bietet hier die Verwendung elektrischer Heizelemente (DE 4 312 309 C2), die direkt auf das Spinndüsenpaket geschraubt oder gespannt sein können. Dies bedeutet jedoch, daß die für die Heizleistung erforderliche Energie über Leitungen und Kontakte zugeführt werden muß, die dann im Falle einer Demontage des Spinnpüsenpaketes oder auch Teile desselben gelöst werden müssen, was zu einer deutlichen Erhöhung des Arbeitsaufwandes sowie zu einem verstärkten Verschleiß der beteiligten Elemente führt. Außerdem treten Energieverluste in den Leitungen und Kontaktbrücken auf. Ein weiterer Aspekt hierbei ist die Gefährdung der Anlagenbediener durch die elektrische Spannung, die an diesen Heizelementen anliegt und durch unsachgemäße Handhabung die Personen gefährden kann.

Auch die direkte Thermoölbeheizung stellt eine erhebliche Verkomplizierung des Ein- und Ausbaus der Spinndüsen bzw. des Düsenpaktes dar, da beim Herstellen oder Entfernen der Verbindungen mit Ölverschmutzungen zu rechnen ist. Außerdem stören diese Rückstände bei der Reinigung von Düsenbohrungen in Reinigungsanlagen. Eine örtliche Temperaturanpassung bei Störeinflüssen ist nicht möglich.

Ähnlich große Bedeutung wie eine gleichmäßige Verteilung der Schmelze und Temperatur hat die Gleichmäßigkeit der Fadenkühlung beim Austritt aus dem Spinndüsenpaket. Hier muß sichergestellt sein, daß jedes Filament mit möglichst der gleichen Lufttemperatur auf der gleichen Wegstrecke und mit möglichst gleicher Geschwindigkeit gekühlt wird. Die größte Bedeutung hierbei hat die Abkühlung am Erstarrungspunkt der Schmelze, da hier die noch frei beweglichen und bereits vororientierten Kunststoffmoleküle in ihrer momentanen Lage eingefroren werden. Unterschiede in der Abkühlung führen in der Regel zu einer unterschiedlichen Verstreckbarkeit und schlimmstenfalls zu Fadenbrüchen bereits in der Spinnerei. Zur Reduzierung dieser Einflüsse werden, abhängig von der jeweiligen Düsenform, Queranblasungen, Inflow-Kühlung (von außen nach innen) und Outflow-Kühlung (von innen nach außen) eingesetzt. Je nach Lochfelddichte, Lochfeldbreite, Polymer und Durchsatz variiert die Luftgeschwindigkeit zwischen 0.1 und mehr als 20 m/s.

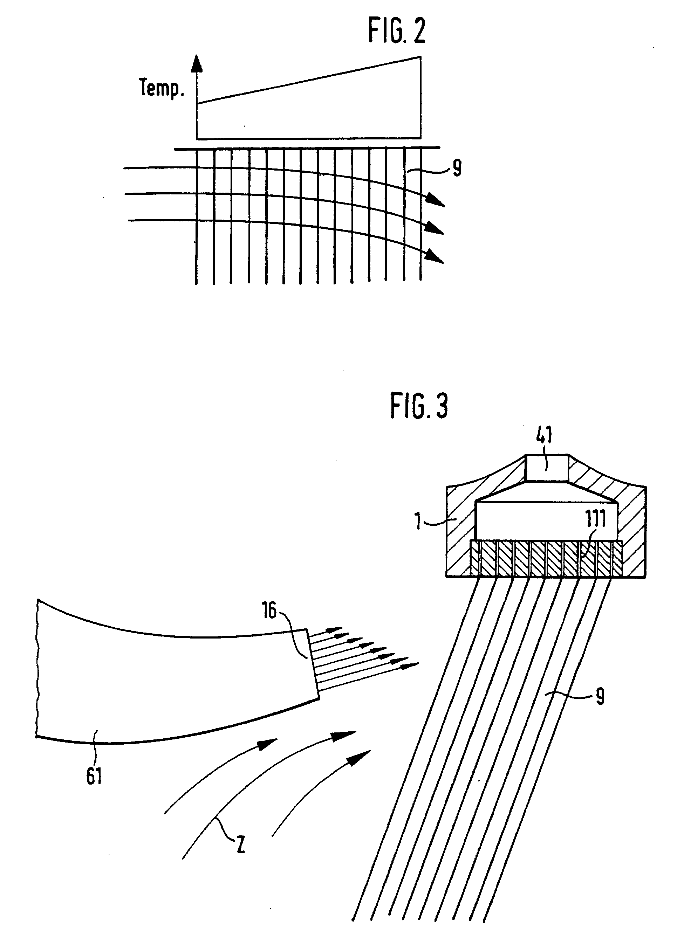

Allen Kühlverfahren und Luftgeschwindigkeiten gleich ist das Problem, daß sich die Blasluft beim Durchdringen der Filamentschar von Filament zu Filament (Fig. 2) mehr erwärmt und somit beim Austritt aus der Filamentschar eine deutlich höhere Temperatur als an der Eintrittsseite aufweist. Folglich werden die Filamente auf der Austrittsseite anders abgekühlt als die Filamente auf der Eintrittsseite der Kühlluft. Dies führt, wie schon geschildert, zu unterschiedlicher Verstreckbarkeit und zu verminderten Produktqualitäten. Zusätzlich erfolgt durch die Bewegung der Filamente und der daraus resultierenden Schleppströmung eine mehr oder minder große Ablenkung eines vormals gezielt gerichteten Luftstroms, so daß auch die Gleichmäßigkeit des Erstarrungspunktes zwischen Eintritt- und Austrittseite nicht mehr gegeben ist.

In der EP 0 536 497 ist deshalb eine Kühlvorrichtung mit Outflow-Anblasung beschrieben, die zur Verringerung der Temperaturdifferenzen bzw. zur Kompensation der Blasluftablenkung aus zwei unterschiedlich gerichteten und hinsichtlich der Blasluftströmung weitgehend unabhängig einstellbaren Einheiten besteht, die die Kühlluft zur Kompensation der Strömung nach unten in einem bestimmten Winkel β entgegen der Filamentbewegung nach oben abgeben. Diese Blasluftströmung ist aufwendig und dennoch nicht befriedigend.

Aufgabe der vorliegenden Erfindung ist es, die Bedingungen hinsichtlich des Extrudierens des fadenbildenden polymeren Materials und damit die Qualität des Endproduktes zu verbessern.

Die Lösung erfolgt durch eine Vorrichtung gemäß den Merkmalen des Anspruchs 1. Die erfindungsgemäße Blasdüse erlaubt auf einfache Weise eine rasche und wirkungsvolle Abkühlung aller extrudierten Filamente in gleicher Weise auch bei Düsenpaketen mit großen Lochzahlen. Ohne mehrere Blasdüsen vorsehen zu müssen, die zudem unabhängig voneinander auf die richtige Kühlluftmenge und -geschwindigkeit jeweils einstellbar sein müssen, wird gemäß der Erfindung die richtige Mengen- und Geschwindigkeitsverteilung durch die Ausbildung der Blasdüse erreicht. Die überraschend große Wirkung dieser erfindungsgemäßen Blasdüse beruht offensichtlich darauf, daß durch die Geschwindigkeitsverteilung und die wesentlich höhere Geschwindigkeit an der dem Spinndüsenpaket abgewandten Seite der Blasdüse eine Injektorwirkung erzeugt wird, die ein Nachsaugen von Luft aus dem Bereich unterhalb und auch von außerhalb der Fadenschar bewirkt. Dadurch entsteht eine Zirkulation innerhalb der Filamentschar, wobei die von außen durch die Filamentschar hindurch angesaugte Luft zu einer Verstärkung des aus der Blasdüse austretenden Blasluftstromes führt.

Dadurch, daß durch die Zirkulationsbewegung Frischluft von außen nach innen angesaugt wird, trifft zuerst kühle Luft auf die äußeren Filamentreihen und führt damit zu einer weiteren Reduktion der Abkühlungsunterschiede zwischen den auf der Blaslufteintrittsseite und auf der Blasluftaustrittsseite angeordneten Filamentreihen. Zur Erhöhung der Kühlleistung ist das Einsprühen von Wasser oder einer Spinnpräparation in den Blasluftstrom vorteilhaft. Durch die Verdunstung der zu Aerosolen zerstäubten Flüssigkeit wird den schmelzflüssigen Filamenten eine große Wärmemenge entzogen und die Erstarrung der Schmelze auf einer deutlich reduzierten Kühllänge erreicht. Da insbesondere bei der Herstellung grober Filamente die Kühlleistung eine Begrenzung hinsichtlich des Durchsatzes darstellt, wird hierdurch die Produktivität der Spinnvorrichtung erheblich erhöht. Die vorgeschaltete Krümmung in entgegengesetzter Richtung zur Krümmung am Düsenaustritt ermöglicht es, die Kühlluft auch von unten zuzuleiten.

Eine weitere Verbesserung im Sinne der o.g. Aufgabenstellung wird durch die Merkmale der Ansprüche 6 und 7 erreicht. Es hat sich nämlich gezeigt, daß die Gleichmäßigkeit der Luftgeschwindigkeit über den Umfang der Blasdüse ebenfalls eine entscheidende Rolle für die Laufsicherheit der Filamentproduktion spielt. Trotz genauester Einstellung des Spaltes der Blasdüse über den gesamten Umfang treten Mängel in der Laufsicherheit der Filamentproduktion auf. Dadurch, daß der Mündungsöffnung, insbesondere der Krümmung eine Verengung vorgeschaltet ist, durch die der Luftstrom flachgedrückt wird, wird eine wesentliche Vergleichmäßigung der Luftgeschwindigkeit über den gesamten Austrittsbereich der Düse erreicht.

Durch die US-PS 3.650.716 ist es bekannt, ein zähflüssiges Material zu Fasern wie Glas in Filamente umzuwandeln, wobei dies durch Zentrifugalkraft erfolgt. Die zähflüssige Masse wird durch Öffnungen gedrückt und eine Heizvorrichtung hält die Glasmasse auf der entsprechenden Temperatur. Ein Hochgeschwindigkeitsgas, das durch eine Druckkammer, mittels eines Brenners oder einem Dampfgebläse produziert wird, wird durch die Austrittsöffnungen einer Blasdüse zu den Filamenten geleitet, um diese bei der erforderlichen Temperatur zu halten. Die Blasdüse ist dabei nicht auf die Austrittsöffnung der Filamente gerichtet, sondern wirkt parallel zu den Filamentöffnungen, so daß die austretenden Filamentscharen umgelenkt werden. Ein bestimmtes Geschwindigkeitsprofil dieses Gasstromes wird durch diese bekannte Blasdüse nicht erzielt. Die Filamentscharen werden von diesem Gasstrom auch nicht durchströmt. Selbst wenn es sich um einen Kühlluftstrom handeln würde, so ist mit der bekannten Vorrichtung eine gleichmäßige Temperierung und Abkühlung der aus den Spinndüsen austretenden Filamente nicht erreichbar.

Eine weitere Verbesserung im Sinne der oben genannten Aufgabenstellung wird durch die Merkmale des Anspruchs 18 erzielt.

Es hat sich gezeigt, daß durch Verwendung einer Induktionsheizung eine Wärmequelle zur Verfügung steht, die die Wärme dort, wo sie gebraucht wird, nämlich im Düsenpaket, entstehen läßt. Zur Vergleichmäßigung der Beheizung kann zusätzlich ein Kurzschlußring vorgesehen sein, in welchem durch Induktion ein Strom zu fließen beginnt und der durch diesen Strom aufgeheizt wird. Die Wärme wird so auf dem kürzesten Weg den kritischen Stellen des Düsenpaketes, den Verteilerkanälen sowie der Düsenplatte mit dem Lochfeld ohne Kabel und Kontaktverbindungen zugeleitet bzw. sie entsteht dort unmittelbar, so daß Verluste vermieden werden. Beim Auswechseln des Düsenpaketes oder Teilen desselben muß lediglich die mechanische Befestigung des Düsenpaketes gelöst werden. Die Induktionsheizung kann unverändert an Ort und Stelle verbleiben.

Weitere Einzelheiten der Erfindung werden anhand der Zeichnungen beschrieben.

Es zeigen

Fig. 1 - eine schematische Gesamtdarstellung der erfindungsgemäßen Vorrichtung;

Fig. 2 - die Temperaturzunahme bei der Durchströmung der Filamentschar gemäß dem Stand der Technik;

Fig. 3 - die Geschwindigkeitsverteilung der Strömung an der Mündung der Blasdüse;

Fig. 4 - die Zirkulationsströmung in Verbindung mit der Blasdüse;

Fig. 5 - die Verstelleinrichtung der Blasdüse;

Fig. 6 und 7 - die Induktionsheizeinrichtung in schematischer Darstellung;

Fig. 8 - die erfindungsgemäße Vorrichtung mit Blasluftzuführung von oben;

Fig. 9 - eine andere Ausführung der Induktionsheizeinrichtung;

Fig.10/11 - Einzelheiten der Ausführung nach Fig. 9;

Fig.12/13 - zwei weitere Ausführungsbeispiele der erfindungsgemäßen Gestaltung der Blasdüse.

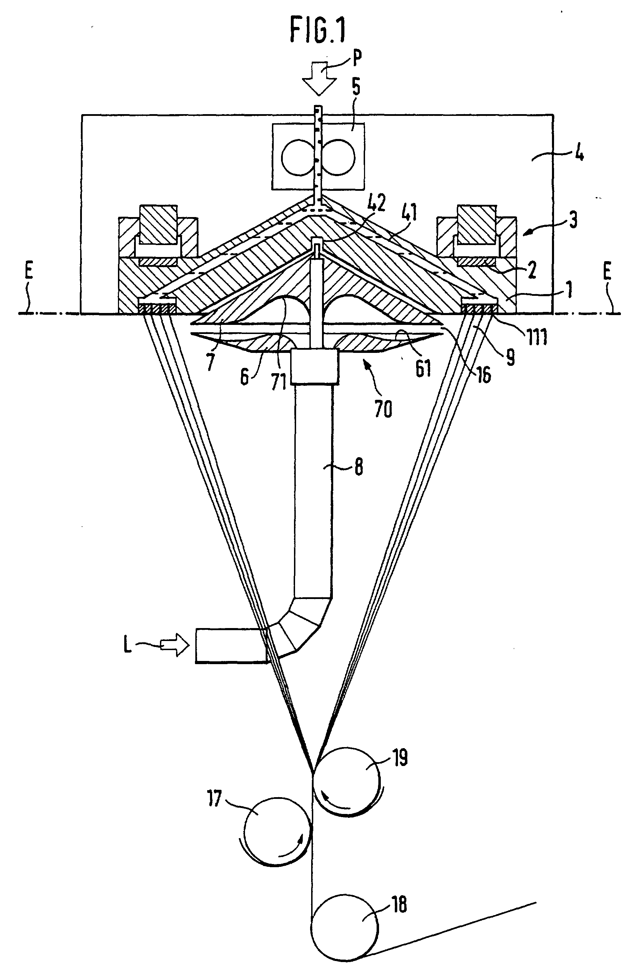

Fig. 1 zeigt ein ringförmiges Spinndüsenpaket 1, das in einem Gehäuse 4 eingebaut ist und Düsenbohrungen 111 enthält. Aus den Düsenbohrungen 111 treten entsprechend kreisförmig Filamente 9 aus, die über die Abführwalze 18 abgezogen werden. Die Bündelung der Filamente 9 erfolgt durch zwei einander gegenüberliegende Präparationswalzen 17 und 19, die gleichzeitig die für den weiteren Prozeß notwendige Präparationsflüssigkeit auftragen. Über ein konzentrisch zu dem Spinndüsenpaket 1 angeordnetes Rohr 8 wird Blasluft L zu einer Blasdüse 70 geleitet, die im wesentlichen aus einem Unterteil 6 und einem Oberteil 7 besteht. Die Blasluft tritt radial nach außen aus der Mündungsöffnung 16 aus und durchströmt die Filamente 9 von innen nach außen unmittelbar nach ihrem Austritt aus den Düsenbohrungen 111. Die Mündungsöffnung 16 der Blasdüse 70 ist entsprechend der kreisförmigen Anordnung der Düsenbohrungen 111 ringförmig ausgebildet und konzentrisch zum Spinndüsenpaket 1 angeordnet.

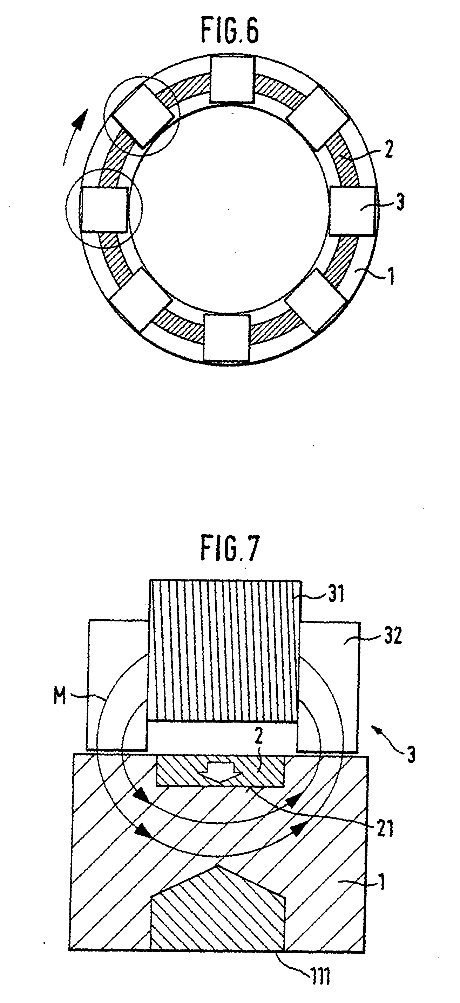

Die Zufuhr der Schmelze P zum Spinndüsenpaket 1 erfolgt durch eine Spinnpumpe 5, die die Schmelze P über Verteilerkanäle 41 dem Spinndüsenpaket 1 zuführt und gleichmäßig verteilt. Die für eine gute Schmelzeverteilung notwendige Temperaturgleichmäßigkeit wird über eine Induktionsheizeinrichtung sichergestellt, die Induktionsspulen 3 mit U-förmigem Eisenkern 32 sowie einen Kurzschlußring 2 aufweist. Der Kurzschlußring 2 ist in einer Ausnehmung 21 des Spinndüsenpaketes 1 eingelassen und direkt mit dem Spinndüsenpaket 1 durch Verschrauben oder dergleichen verbunden, so daß die in dem Kurzschlußring 2 erzeugte Wärme unmittelbar an das Spinndüsenpaket 1 abgegeben wird. Die Induktionsspulen 3 sind über den Umfang des Kurzschlußring 2 gleichmäßig verteilt. Durch den über der Ausnehmung 21 im Düsenpaket 1 angeordneten U-förmigen Eisenkern 32 entstehen bei Stromdurchfluß magnetische Feldlinien M, die den ferromagnetischen Werkstoff des Düsenpaketes 1 in radialer Richtung durchfluten (Fig. 7).

Das Spinndüsenpaket 1 als auch die Induktionsspulen 3 sind in einem Gehäuse 4 der Spinnvorrichtung angeordnet, jedoch jeweils unabhängig voneinander befestigt, so daß das Spinndüsenpaket 1 für sich allein ohne Beeinträchtigung der Induktionsspulen 3 montiert werden kann.

Die wegen der Benutzung einer zentralen Schmelzeverteilung erforderliche Luftzufuhr von unten wird durch eine spezielle Blasdüse 70 gegen die aus den Düsenbohrungen 111 austretenden Filamente 9 gelenkt.

Wie aus Fig. 3 hervorgeht, ist die Blasdüse 70 zur Führung der Blasluft L in besonderer Weise ausgebildet. Das Oberteil 7 und das Unterteil 6 bilden zusammen eine Führung der Luft, wobei im Unterteil 6 kurz vor der Mündungsöffnung 16 die Luftführung eine Krümmung 61 aufweist, durch die die Luftströmung zum Austritt der Filamente 9 aus den Düsenbohrungen 111 hin abgelenkt wird. Der Scheitel der Krümmung 61 liegt deshalb auf der den Düsenbohrungen 111 abgelegenen Seite. Beim Durchlaufen dieser Krümmung 61 verdichtet sich an der Außenseite der Krümmung 61 die strömende Luft und bekommt dadurch eine erhöhte Geschwindigkeit. Dieses Geschwindigkeitsprofil ist in Fig. 3 schematisch dargestellt. Je nachdem, wie der Bogen dieser Krümmung 61 gestaltet wird, ist damit ein für das Durchströmen der Filamentschar 9 günstiges Geschwindigkeitsprofil zu erreichen.

Bei Versuchen hat sich nun gezeigt, daß grundsätzlich gilt: je stärker die Umlenkung durch die Krümmung 61 vor der Mündungsöffnung 16 der Verengung ist, umso ausgeprägter ist das Geschwindigkeitsprofil. Allerdings steigen damit auch die Turbulenzen der Strömung. Weiterhin wurde festgestellt, daß mit zunehmendem Krümmungswinkel $\alpha$ auch die Bauhöhe der Blasdüse 70 zunimmt, was unerwünscht ist, so daß der Krümmungswinkel $\alpha$ zweckmäßig nicht größer als 90° auszubilden ist. In diesem Bereich bleibt die Bauhöhe der Blasdüse 70 angemessen, und es wird trotzdem ein gutes und ausgeprägtes Strömungsprofil ohne große Turbulenzen erzeugt.

Da mit zunehmender Länge des Abschnittes nach der Krümmung 61 zwar die Turbulenzen verringert werden können, jedoch das durch die Umlenkung erzeugte Geschwindigkeitsprofil wieder vergleichmäßigt wird, hat sich eine Länge von vorzugsweise dem zwei- bis vierfachen des Höhenabstandes H des Querschnittes der Mündungsöffnung 16 als optimal erwiesen.

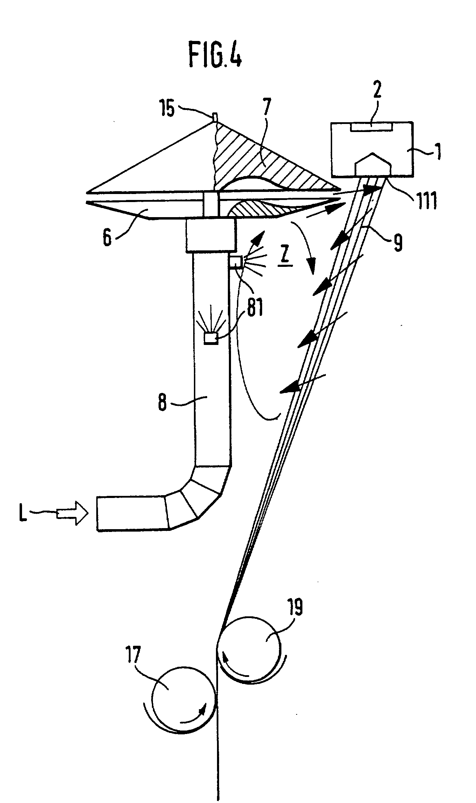

Durch Messungen hat sich gezeigt, daß durch die Erzeugung eines derartigen Strömungsgeschwindigkeitsprofils der Blasdüse 70 eine Zirkulationsströmung Z entsteht, die den Kühlluftstrom der Blasdüse 70 in äußerst günstiger Weise unterstützt und verstärkt. Aus Fig.4 ist zu erkennen, daß der aus der Mündung 16 austretende Luftstrom eine Injektorwirkung ausübt und Luft aus dem Bereich unterhalb der Blasdüse 70 ansaugt. Dies geht so weit, daß selbst aus dem Bereich außerhalb der Filamentschar 9 Luft nachströmt, die in ihrer Kühlwirkung noch unverbraucht auf die äußeren Filamente 9 einwirkt. Es kommt aber auch zu einer Luftzirkulation Z innerhalb der Filamentschar 9 durch die Abwärtsbewegung der Filamente. Daraus erklärt sich offensichtlich die große Wirksamkeit der erfindungsgemäß ausgebildeten Blasdüse 70.

Die Kühlwirkung der Blasluft L läßt sich natürlich auch noch durch Einsprühen von Wasser oder einer Spinnpräparation verstärken. Zu diesem Zwecke können entweder innerhalb der Blasluftleitung 8 und/oder sternförmig um diese Leitung 8 Sprühdüsen 81 angeordnet sein (Fig.4). Auch hierbei wirkt sich die oben beschriebene Luftzirkulation günstig aus.

Bei dem beschriebenen Ausführungsbeispiel (Fig. 4) wird die Blasluft L von unten durch die Blasluftleitung 8 zur Blasdüse 70 geleitet. Nachdem die Blasluft radial von innen nach außen durch die Filamentschar 9 blasen soll, ist eine Umlenkung der Luftströmung um etwa 90° erforderlich. Durch eine solche Umlenkung würde jedoch ein unerwünschtes Strömungsprofil entstehen. Aus diesem Grunde ist der Krümmung 61 eine zweite Krümmung 71 vorgeschaltet, wobei deren Scheitel sich in dem Oberteil 7 der Blasdüse 70 befindet. Dieses Oberteil 7 erstreckt sich dachförmig nach oben bzw. bei einer runden Ausbildung des Blaskopfes kegelförmig, damit genügend Platz für die Krümmung 71 vorhanden ist. Durch diese beiden hintereinander geschalteten Krümmungen 71 und 61 wird die Luft, die senkrecht nach oben steigt, zunächst wieder nach unten umgelenkt, um dann durch die Krümmung 61 mit dem gewünschten Geschwindigkeitsprofil an der Mündung 16 so gerichtet zu sein, daß die Blasluftströmung unmittelbar die aus den Düsenbohrungen 111 austretenden Filamente 9 über die gesamte Breite des Düsenpaketes 1 erfaßt. Dabei trifft die am unteren Rand der Krümmung 61 austretende Luftströmung mit höherer Geschwindigkeit auf die Filamentschar 9 und in größerer Entfernung vom Düsenaustritt als die mit geringerer Geschwindigkeit ankommende Luftströmung an der durch das Oberteil 7 gebildeten Innenwand der Krümmung 61, die die Fadenschar 9 unmittelbar nach dem Austritt aus den Düsenbohrungen 111 auf der Eintrittseite erfaßt, während die Filamentschar 9 auf der Austrittsseite durch die höhere Luftgeschwindigkeit an der Außenseite der Krümmung 61 erfaßt wird.

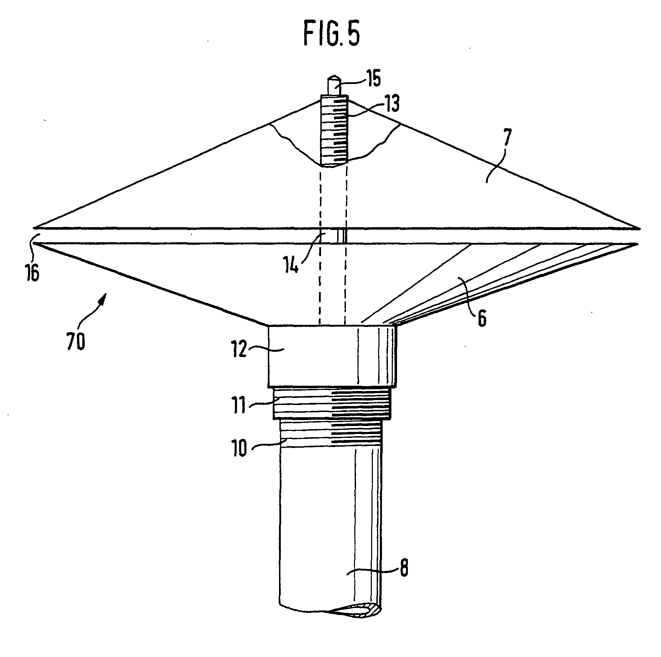

Um die Blasdüse 70 gegenüber den Düsenbohrungen 111 in vertikaler Richtung plazieren zu können, ist diese mit einer Stelleinrichtung ausgestattet, die auch ein Einstellen der Weite der Mündungsöffnung 16 erlaubt. In Fig. 5 ist diese Einstellmechanik gezeigt, mit welcher sich die Blasluft L exakt auf die jeweiligen Erfordernisse einstellen läßt. Die radiale Fixierung der Blasdüse 700 erfolgt über die Zentrierung 15, welche über die Verbindungsstange 14 mit dem Gewindestück 11 verbunden ist. Durch Drehung des Gewindestücks 11 auf dem Gewinde 10 am Ende der Blasluftleitung 8 wird die Zentrierung 15 in der Höhe eingestellt und in eine Zentrierausnehmung 42 des Gehäuses 4 eingefahren (Fig. 1). Über das Gewinde 13 kann nun das Oberteil 7 der Blasdüse 70 so in der Höhe eingestellt werden, daß die Filamente 9 zum optimalen Zeitpunkt nach dem Austreten aus den Düsenbohrungen 111 gekühlt werden.

Über das Gewinde 11 und das Ausgleichsstück 12 kann die Position des Unterteils 6 der Blasdüse 70 verändert werden. Durch die Verstellung des Unterteils 6 gegenüber dem Oberteil 7 kann auf diese Weise die Mündungsöffnung 16 so eingestellt werden, daß für jeden Titer, jedes Material und jede Produktionsgeschwindigkeit die notwendige Kühlstrecke bis zum Erkalten der Filamente 9 zur Verfügung steht. Durch die richtige Einstellung der Mündungsöffnung 16 in Verbindung mit der Fördermenge der Blasluft L ist es möglich, einen unnötig hohen Luftverbrauch zu vermeiden und dennoch die erforderliche Kühlwirkung zu erzielen. Insbesondere bei der Erspinnung feiner Fasern, wo zur Erhöhung der Wirtschaftlichkeit sehr hohe Lochzahlen im Düsenpaket 1 untergebracht sind, können die zur Überwindung des sich ergebenden Durchdringungswiderstandes notwendigen hohen Luftgeschwindigkeiten durch Verringerung der Mündungsöffnung 16 auf diese Weise erzeugt werden.

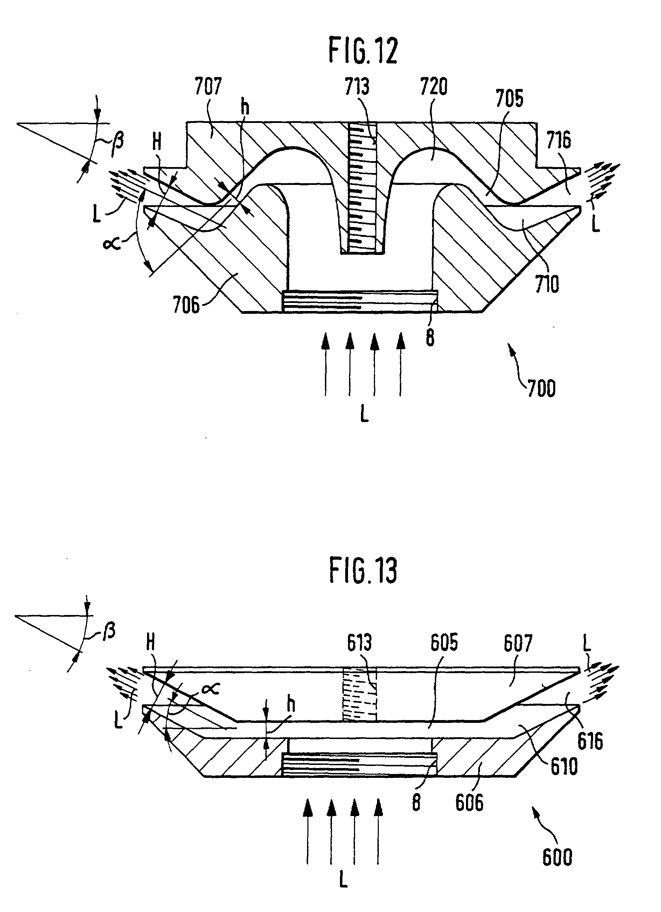

Für eine gleichmäßige Abkühlung der aus den Düsenbohrungen 111 extrudierten Filamente 9 ist nicht nur das beschriebene Strömungsprofil notwendig, sondern auch, daß dieses Strömungsprofil gleichmäßig über die gesamte Mündungsöffnung der Blasdüse vorhanden ist. Auch bei genauester Einstellung des Spaltes der Blasdüse über den gesamten Umfang können andernfalls Mängel in der Laufsicherheit der Filamentproduktion auftreten. Fig. 12 zeigt einen Blasdüsenkopf, ähnlich wie anhand der Figuren 1, 3 und 4 bereits beschrieben.

In Fig. 12 besteht die Blasdüse 700 aus einem Oberteil 707 und einem Unterteil 706. Das Unterteil 706 ist an eine Blasluftleitung 8 angeschlossen, aus der der Blasluftstrom L in die Blasdüse 700 eintritt. Die Blasluftdüse 700 ist beispielsweise eine Ringdüse, bei der die Blasluft L zentrisch von unten eintritt und vom Zentrum der Blasdüse 700 zu der ringförmigen Mündungsöffnung 716 strömt, wo sie die Blasdüse 700 verläßt und gegen die aus den hier nicht gezeigten Bohrungen 111 der Spinndüsen 1 austretenden Fäden 9 strömt. Auf diesem Wege passiert der Blasluftstrom L zuerst eine Umlenkung 720, auf die eine Verengung 705 folgt und an welche wiederum eine Krümmung 710 anschließt, bevor der Blasluftstrom L die Mündungsöffnung 716 erreicht hat. Die Verengung wird durch Verringerung des Höhenabstandes h zwischen den Luftführungswänden der Blasdüse 700 gebildet. Die auf die Verengung 705 folgende Mündungsöffnung 716 hat jedoch wieder einen größeren Höhenabstand H als die Verengung 705. Die Blasluft tritt sodann radial nach außen aus der Mündungsöffnung 716 aus und durchströmt die hier nicht gezeigten Filamente 9 unmittelbar nach ihrem Austritt aus den Düsenbohrungen von innen nach außen. Die Mündungsöffnung 716 der Blasdüse 700 ist entsprechend der kreisförmigen Anordnung der Düsenbohrungen ringförmig ausgebildet und konzentrisch zu dem hier nicht gezeigten Spinndüsenpaket 1 angeordnet. Wie bereits erwähnt, besitzt sie einen Querschnitt mit einem größeren Höhenabstand als die Verengung 705. Die Blasluftleitung 8 besitzt beim Eintritt in die Blasdüse 700 wiederum einen Querschnitt mit einem größeren Höhenabstand als die Verengung 705, so daß durch diese Engstelle eine Umformung des Blasluftstromes L in der Weise geschieht, daß dieser plattgedrückt wird.

Es hat sich gezeigt, daß durch diese Umformung eine erhebliche Verbesserung der Verteilung der Strömungsgeschwindigkeit über den Umfang der Mündungsöffnung 716 der Blasdüse 700 erreicht wird. Möglicherweise werden Turbulenzen in der Zuströmung durch diese Verminderung und anschließende Vergrößerung des Höhenabstandes beruhigt, so daß über den gesamten Bereich der Mündungsöffnung 716 eine Vergleichmäßigung der Strömungsgeschwindigkeit eintritt. Im übrigen wird durch die Krümmungen 720 und 710 ein für das Durchströmen der Filamentschar günstiges Geschwindigkeitsprofil erreicht, wie oben bereits beschrieben.

Um die Blasdüse 700 gegenüber den Düsenbohrungen 111 in vertikaler Richtung plazieren zu können, ist diese mit einer Stelleinrichtung ausgestattet, wie sie im Zusammenhang mit der Ausführung gemäß Fig. 5 beschrieben ist. Diese Stelleinrichtung erlaubt die Einstellung der Weite der Mündungsöffnung 716. Die radiale Fixierung der Blasdüse 700 erfolgt in der gleichen Weise über eine Zentrierung 15, welche über eine Verbindungsstange 14 mit dem Gewindestück 11 verbunden ist. Die Verbindungsstange 14 weist ein Gewinde 13 auf, das in die Gewindebohrung 713 des Oberteiles eingreift. Über dieses Gewinde 713 kann das Oberteil 707 der Blasdüse 700 so in der Höhe eingestellt werden, daß die Filamente 9 zum optimalen Zeitpunkt nach dem Austreten aus den Düsenbohrungen 111 gekühlt werden.

Durch Verstellen des Unterteiles 706 gegenüber dem Oberteil 707 kann die Mündungsöffnung 716 so eingestellt werden, daß für jeden Titer, jedes Material und jeden Durchsatz die notwendige Kühlstrecke bis zum Erkalten der Filamente 9 zur Verfügung steht. Durch die richtige Einstellung der Mündungsöffnung 716 in Verbindung mit der Fördermenge der Blasluft L ist es möglich, einen unnötig hohen Luftverbrauch zu vermeiden und dennoch die erforderliche Kühlwirkung zu erzielen. Insbesondere bei der Erspinnung feiner Garne, wo zur Erhöhung der Wirtschaftlichkeit sehr hohe Lochzahlen im Düsenpaket 1 untergebracht sind, können die zur Überwindung des sich ergebenden Durchdringungswiderstandes notwendigen hohen Luftgeschwindigkeiten durch Verringerung der Mündungsöffnung 716 auf diese Weise erzeugt werden.

Dieser Verstellung der Mündungsöffnung 716 paßt sich automatisch bei der Verstellung des Unterteiles 706 gegenüber dem Oberteil 707 auch die Verengung 705 an, so daß die Verengung 705 gegenüber der Mündungsöffnung 716 stets einen Querschnitt mit geringerem Höhenabstand h aufweist als die Mündungsöffnung 716, auch wenn letztere verkleinert wird.

Diese Verengung 705 hat sich als außerordentlich wirksam erwiesen. Versuche haben gezeigt, daß allein der Variationskoeffizient des Titers um 20 % erniedrigt werden konnte. Die Blasluftmengen konnten erstaunlicherweise etwa auf die Hälfte gesenkt werden. Diese Verengung 705 hat auf die Vergleichmäßigung des Blasluftstromes nicht nur im Zusammenhang mit der der Mündungsöffnung 716 vorgeschalteten Krümmung 710 bedeutenden Einfluß, sondern wirkt sich auch bei einer herkömmlichen Blasdüse ohne die erfindungsgemäße Krümmung 710 aus (z.B. DE-OS 2 920 676).

Fig. 13 zeigt eine andere Ausführung der Erfindung, die sich insbesondere dadurch auszeichnet, daß sie wesentlich einfacher und billiger in der Herstellung ist. Auch die Blasdüse 600 besteht aus einem Oberteil 607 und einem Unterteil 606, wobei der Blasluftstrom L aus der Blasluftleitung 8 in das Unterteil 606 eintritt. Das Oberteil 607 und das Unterteil 606 sind tellerförmig ausgebildet. Durch den Abstand zwischen Ober- und Unterteil ist eine Verengung 605 gebildet, die sich rechtwinkelig zur Blasluftleitung 8 erstreckt. An diese Verengung 605 schließt sich eine winkelförmige Krümmung 620 an, durch welche eine Umlenkung des Blasluftstromes erfolgt, so daß an der Mündungsöffnung 616 das gewünschte Geschwindigkeitsprofil erreicht wird. Bei vertikaler Verstellung des Oberteils 607 gegen das Unterteil 606 wird gleichzeitig der Höhenabstand h des Querschnittes der Verengung 605 wie auch der Höhenabstand H der Mündungsöffnung 616 verringert, so daß die Strömungsverhältnisse in etwa gewahrt bleiben.

Wie eingangs erwähnt, ist für die Qualität des Endproduktes nicht nur die zeitgerechte und gleichmäßige Abkühlung der aus den Düsenbohrungen 111 extrudierten Filamente 9 wichtig, sondern auch eine gleichmäßige Temperaturverteilung in der Schmelze P bis vor den Austritt der Schmelze P aus den Düsenbohrungen 111. Hierfür ist eine Induktionsheizung vorgesehen, die anhand der Fig. 6 und 7 näher erläutert wird. In eine Ausnehmung 21 des ringförmig angeordneten Düsenpaketes 1 ist ein Kurzschlußring 2 eingelassen, der somit eine dreiseitige direkte Verbindung mit dem Spinndüsenpaket 1 hat. Die Tiefe der Ausnehmung 21 im Düsenpaket 1 kann mit der Stärke des Kurzschlußringes 2 übereinstimmen, so daß ein bündiger Abschluß erreicht wird, es kann aber auch ein Abdeckring für den Kurzschlußring 2 vorgesehen sein, der ebenfalls von der Ausnehmung 21 im Düsenpaket 1 aufgenommen wird.

Die Induktionsspulen 3 bestehen im wesentlichen aus dem hufeisenförmigen Eisenkern 32 und der Wicklung 31. Die Ausnehmung 21 im Spinndüsenpaket 1 läßt zwei ausgeprägte Pole entstehen, welchen die Polflächen der Induktionsspulen 3 gegenüberliegen. Durch diese Anordnung werden die Magnetfeldlinien M gebündelt und gerichtet (Fig. 7). Außerdem lassen sich so die Induktionsspulen 3 in einfacher Weise ohne aufwendige Umgestaltung des Düsenpaketes 1 wirkungsvoll unterbringen.

Werden nun die Induktionsspulen 3 durch Wechselstrom vorzugsweise im Bereich der üblichen Netzfrequenzen von 50 bzw. 60 Hz erregt, so wird nach der "Generator-Regel (rechte Hand)" ein Strom in Umfangsrichtung des Düsenpaketes 1 induziert. Damit dieser Strom, wie gewünscht, in Umfangsrichtung fließen kann, müssen alle Induktionsspulen 3 phasengleich arbeiten, d.h. der Strom in den Spulen muß zur gleichen Zeit seine minimalen und maximalen Werte erreichen und alle Spulen in der gleichen Richtung durchfließen.

Die Stärke des im Düsenpaket 1 induzierten Stromes hängt von der Flußdichte im magnetischen Kreis und vom Ohmschen Widerstand des verwendeten Werkstoffes (z.B. Werkstoff Nr. 1.4057 mit $0{,}7 \ \frac{\Omega \cdot mm^2}{m}$) ab.

Die Stromstärke läßt sich errechnen nach der Formel $P = I^2 \cdot R$.

Hier ist nach dem Kurzschlußanteil $P_K$ der Gesamtleistung gefragt, welche aus der Leistung des Kurzschlußstromes und der Leistung aller Wirbelströme $P_W$ besteht.

Die gesamte in Wärme umgesetzte Leistung ergibt sich folglich zu:

$$P = U \cdot I \cdot cos = P_w + P_k \qquad P_k = P - P_w \quad / \quad P_w = P - P_k$$

Wird eine gerade Anzahl Induktionsspulen 3 gegensinnig betrieben (die Anschlüsse jeder zweiten Spule werden vertauscht), so sinkt die gegensinnig erzeugte Spannung ab, es entsteht kein das Düsenpaket 1 über den gesamten Umfang durchfließender Strom. Nur in der Umgebung der Polflächen der Induktionsspulen 3 fließen Wirbelströme im Düsenpaket-Werkstoff und nur diese Wirbelströme erwärmen in diesem Bereich das Düsenpaket 1.

Wenn allerdings viele Induktionsspulen 3 in enger Teilung über den Umfang des Düsenpaketes 1 verteilt angeordnet sind, so überschneiden sich die Einflußzonen der Wirbelströme und es kommt zu einer ziemlich gleichmäßigen Temperaturverteilung im Düsenpaket 1, welche für den Spinnprozeß bereits ausreichen mag. Die Temperaturverteilung wird jedoch noch gleichmäßiger und die erzielbare Heizleistung (bei gegebener Baugröße und bei Netzfrequenz 50 bzw. 60 Hz) wird ebenfalls größer bis etwa doppelt so groß, wenn alle Induktionsspulen 3 phasengleich arbeiten.

Wird nun in die Ausnehmung 21 des Düsenpaketes 1 ein Kurzschlußring 2 aus einem elektrisch gut leitenden Werkstoff, z.B. Kupfer, eingelegt, welcher fest und gut wärmeleitend mit dem Werkstoff des Düsenpaketes 1 verbunden ist, so fließt der induzierte Kurzschlußstrom vorwiegend in diesem Kurzschlußring 2, der durch den Kurzschlußstrom gleichmäßig erwärmt wird und die so erzeugte Wärme an das Düsenpaket 1 weitergibt. Die Wärme im Kurzschlußring 2 entsteht gleichmäßig über den gesamten Umfang verteilt, weil die Stromstärke im geschlossenen Ring in jedem Querschnitt gleich groß ist und weil dieser Ring 2 prinzipiell keine unterschiedlichen Querschnitte aufweist. Die aus dem Kurzschlußstrom entstehende Wärme wird also sehr gleichmäßig auf das Düsenpaket 1 übertragen. Zudem steigt die erzielbare Heizleistung.

Während des Spinnprozesses wirken auf die Düsenbohrungen 111 und damit auf das gesamte Düsenpaket 1 von außen Störungen ein, wie beispielsweise örtlich unterschiedliche Abkühlung, verursacht durch die niemals ganz gleichmäßig verteilte Blasluftgeschwindigkeit. Deshalb kann eine unverändert gleichmäßige Temperaturverteilung über die Düsenplatte nur erreicht werden, wenn das Düsenpaket 1 entlang seines Umfanges in Heizzonen (Sektoren) aufgeteilt ist, deren Temperatur individuell regelbar ist. Dabei wird für jeden Sektor in aller Regel der gleiche Temperatur-Sollwert vorgegeben.

Erfindungsgemäß wird die Aufgabe, ein großes Ringdüsenpaket, oder auch ein rechteckiges, oder flächig anders gestaltetes Düsenpaket 1 gleichmäßig zu beheizen, wobei örtlich auftretende Störeinflüsse ausgeregelt werden können, wie folgt gelöst: Jeder Induktionsspule 3 ist ein Temperatursensor an der Oberfläche des Düsenpaketes 1 zugeordnet. Durch eine Regelung nach dem Puls-Pausen-Prinzip kann die Wärmezufuhr jeder Zone über die Induktionsspulen 3 dosiert werden. Während der EIN-Zeit einer Induktionsspule 3 entsteht Wärme im Düsenpaket 1

a) örtlich begrenzt durch Wirbelströme und
b) gleichmäßig auf den Umfang des Düsenpaketoberteils verteilt aus dem von dieser Spule induzierten Anteil des gesamten Kurzschlußstromes.

Weicht nun die Temperatur einer der durch die einzelnen Induktionsspulen 3 gebildeten Heizzonen von der Soll-Temperatur ab, so wird die EIN-Zeit der betreffenden Spule vergrößert oder verkleinert, je nachdem, ob die örtliche Temperatur niedriger oder höher als die Solltemperatur ist.

Während der AUS-Zeit einer Induktionsspule 3 entfällt im Bereich dieser Spule die aus Wirbelströmen resultierende Wärmeleistung und der Beitrag dieser Spule zur Wärmeleistung des Kurzschlußstromes, welche gleichmäßig auf den Umfang des Düsenpaketes 1 verteilt ist.

Während der EIN-Zeit einer Induktionsspule 3 entsteht im Bereich dieser Spule Wärme durch Wirbelströme und ein Anteil der auf den gesamten Düsenpaketumfang verteilten Kurzschlußstromwärme.

**Beispiel:** Sind 12 Induktionsspulen 3 am Umfang eines Düsenpaketes 1 mit einem Durchmesser von 920 mm und einer Masse von ca. 400 kg angeordnet und beträgt die gesamte Heizleistung ca. 12 kW, so wurde gefunden, daß der Wirbelstromanteil ca. 40 % der Gesamtleistung, also 4,8 kW beträgt, je Spule 0,4 kW. Die Leistung des Kurzschlußstromes beträgt demnach 7,2 kW, je Spule 0,6 kW. Während der AUS-Zeit einer Spule wird die Leistung der betreffenden Heizzone um die Wirbelstromleistung und die Kurzschlußleistung dieser Spule verringert, wenn alle anderen Induktionsspulen 3 eingeschaltet sind:

$$0,4 \text{ kW} + \frac{1}{12} \cdot 0,6 \text{ kW} = (0,4 + 0,05) \text{ kW} = 0,45 \text{ kW}.$$

Werden mehrere Induktionsspulen 3 gleichzeitig ausgeschaltet, so verringert sich die Wirbelstromleistung entsprechend der Anzahl der abgeschalteten Spulen 3, während die Kurzschlußleistung exponentiell abnimmt, was auf die zunehmend geringer werdende magnetische Durchflutung und die damit abnehmende Induktion im Kurzschlußring 2 im Spinndüsenpaket 1 zurückzuführen ist. Mittels programmierter Regler ist es möglich, die Temperatur eines vorstehend beschriebenen Düsenpaketes 1 in den einzelnen Heizzonen genau auf den gewünschten Sollwert auszuregeln.

Wird eine Induktionsspule 3 aus einer Gruppe von z.B. 12 Spulen vom speisenden Netz abgeschaltet, so wird in der freigeschalteten Spule durch das von den restlichen 11 Spulen weiterhin erregte Wechselfeld im Werkstoff des Düsenpaketes 1 eine Wechselspannung erzeugt, deren Amplitude um elektrisch 180° gegenüber der Netzspannung verschoben ist. Die Scheitelwerte der Netzspannung und der Spannung aus der leerlaufenden Spule addieren sich. Deshalb muß das die Spule schaltende Schaltelement 35 eine zulässige Sperrspannung aushalten, welche größer ist als der Spitzenwert der Netzspannung addiert zu dem Spitzenwert der in der freilaufenden Spule induzierten Spannung.

**Beispiel:** Effektivwert der Netzspannung 220 V, Spitzenwert 220 V . 2 = 311 V. Effektivwert der in einer freilaufenden Spule induzierten Spannung 170 V, Spitzenwert 170 V . 2 = 240 V Gesamtspannung über den Halbleiter:

$$311 \ V + 240 \ V = 551 \ V.$$

Als Schaltelement dienen hierzu bevorzugt Halbleiter wie Triac oder ähnliches.

Die Induktionsspulen 3 bestehen im wesentlichen aus dem hufeisenförmigen Eisenkern 32 und der Wicklung 31.

Fig. 6 zeigt in der Draufsicht die Anordnung der Induktionsspulen 3 gleichmäßig verteilt über den Umfang des Ringdüsenpaketes 1, die für die übliche Wechselspannung ausgelegt sind.

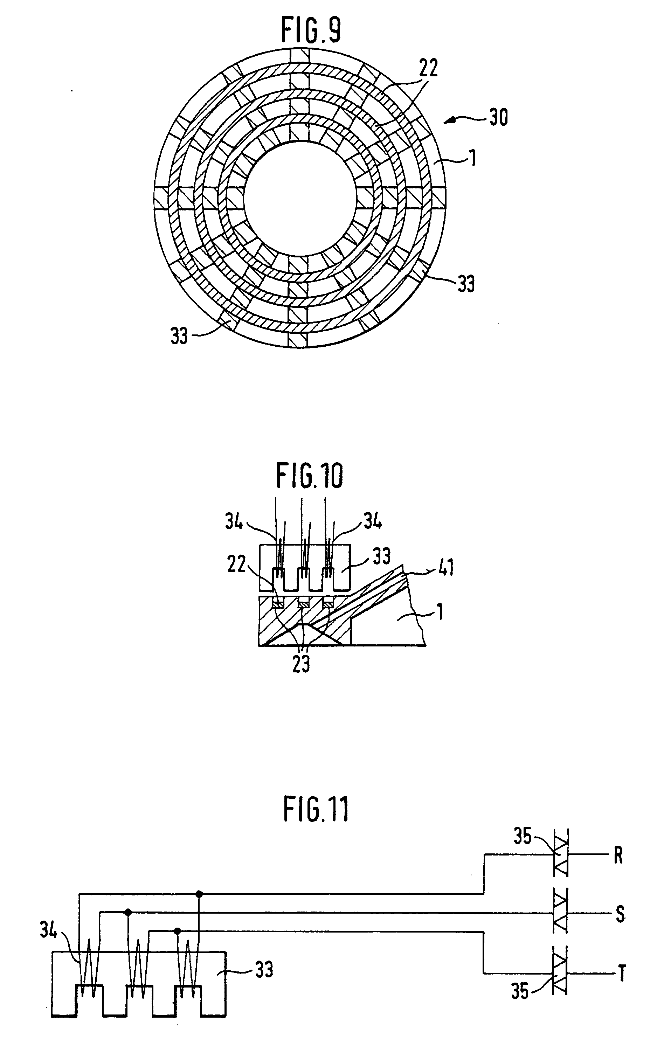

In den Figuren 9, 10 und 11 ist eine andere Ausführung gezeigt, die für 3Phasen- bzw. Drehstrom geeignet ist. In die Ausnehmungen 23 des Düsenpaketes 1 sind drei Kurzschlußringe 22 nebeneinander eingebettet. Sie verlaufen konzentrisch, da das Düsenpaket 1 ringförmig ausgebildet ist. Bei einem geraden Düsenpaket 1 verlaufen die drei Kurzschlußringe 22 geradlinig und parallel zu einander. Über den drei Kurzschlußringen 22 sind gleichmäßig über den Umfang des Düsenpaketes 1 verteilt Induktionsspulen 3 angeordnet, die jeweils drei Wicklungen 34 auf einen hufeisenförmigen Eisenkern 33 gewickelt aufweisen, dessen Polschuhe sich jeweils zwischen den Ausnehmungen 23 über dem Düsenpaket 1 befinden. Jede der Wicklungen 34 der Induktionsspule 30 ist mit der Phase R bzw. S oder T über ein eigenes Schaltelement 35 verbunden, so daß jede Wicklung 34 einzeln zu- und abgeschaltet werden kann. Auf diese Weise wird eine besonders feinstufige Regulierung der Wärmeleistung, insbesondere auch in radialer Richtung, erreicht.

Es ist leicht ersichtlich, daß die Verwendung einer Induktionsheizung Vorteile hat, einmal, weil die Induktionsspulen 3, 30 als Heizelemente völlig unabhängig von dem Spinndüsenpaket 1 sind, so daß beim Auswechseln keine Anschlüsse demontiert werden müssen, wie das bei den üblichen elektrischen oder auch Dampfheizanlagen notwendig ist. Andererseits erfolgt eine absolut gleichmäßige Aufheizung, da unterschiedliche Wärmebrückenspalte und dgl. keine Rolle spielen, nachdem die Wärme direkt dort erzeugt wird, wo sie gebraucht wird. Die erfindungsgemäße Induktionsheizung hat zudem den Vorteil, daß sich die Temperatur auch örtlich begrenzt sehr feinstufig regulieren läßt.

Die gewünschte Temperatur wird durch Temperaturfühler und die oben beschriebene Schalteinrichtung 35 aufrechterhalten, indem die einzelnen Induktionsspulen 3, 30 oder auch einzelne Wicklungen 34 zu- und abgeschaltet werden. Eine besonders feinstufige Temperaturregelung wird beispielsweise auch dadurch erreicht, daß die Schalteinrichtung 35 in einer kurzen Taktfolge die Induktionsspulen 3, 30 zu- und abschaltet. Dabei kann jede einzelne Induktionsspule 3, 30 für sich zu- und abschaltbar sein. Die Einrichtung kann jedoch auch so ausgelegt sein, daß sämtliche Induktionsspulen 3, 30 gleichzeitig zu- und abgeschaltet werden. Durch die jeweils eingestellte Schaltfrequenz wird eine bestimmte Temperatur aufrechterhalten. Durch das Abschalten einzelner Induktionsspulen 3, 30 wird weniger Strom aufgrund der Erregung erzeugt, so daß in dem Kurzschlußring 2 bzw. 22 eine geringere Erwärmung entsteht, die jedoch gleichmäßig über den gesamten Ring sich verteilt. Somit besteht bei Verwendung einer Mehrzonentemperaturregelung die Möglichkeit, Temperaturunterschiede am Umfang eines Spinndüsenpaketes 1 aufgrund externer Störgrößen durch Ab- und Zuschalten einzelner Induktionsspulen 3, 30 auszugleichen, wobei dies durch die oben erwähnte Schalteinrichtung 35 in Taktzeiten von wenigen Sekundenbruchteilen durchgeführt wird.

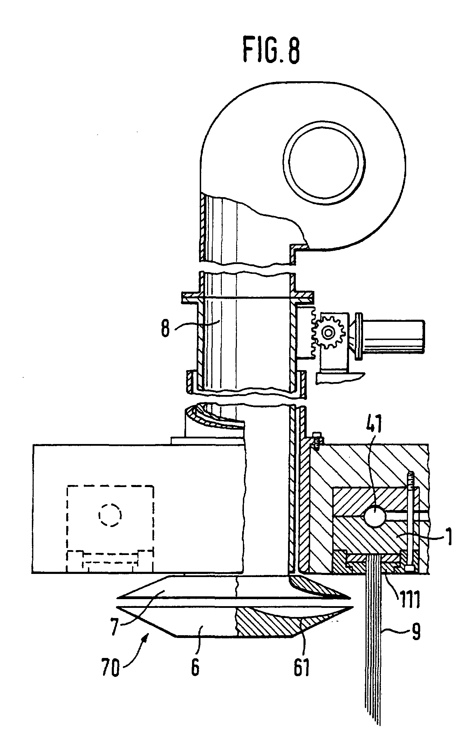

Die Erfindung wurde anhand von Beispielen beschrieben, bei welchem die Luftzuführung von unten erfolgt. Die Erfindung kann jedoch mit gleichem Vorteil auch bei Luftzuführung von oben angewendet werden, wie Fig. 8 zeigt. In diesem Falle ist es nicht notwendig, eine zweite Krümmung 71 vorzuschalten, da der Luftstrom bereits von oben kommt und durch die Krümmung 61 das gewünschte Strömungsprofil erzeugt wird.

Bei der Ausführung in Fig. 13 erfolgt die Luftzuführung von unten. Bei dieser Ausführung kann gleichfalls die Luftzuführung auch von oben erfolgen. In diesem Fall ist das Unterteil 610 ein geschlossener Teller. Die Blasluftleitung 8 ist an das Oberteil 607 angeschlossen.

Die Erfindung ist auch nicht auf ein Ringdüsenpaket 1 bzw. auf eine Blasdüse 70, 600 oder 700 mit einer ringförmigen Mündungsöffnung 16, 616 oder 716 beschränkt. Auch bei einer Reihenanordnung ist es ohne weiteres möglich, ein entsprechendes Strömungsprofil zu erzeugen. Es ist z.B. ohne weiteres denkbar, daß die in der Fig. 1 oder auch Fig. 12 und 13 gezeigten Querschnitte sich auf zwei in Reihe angeordnete Düsenpakete 1 beziehen, die symmetrisch zur Blasdüse 70 bzw. 600 oder 700 angeordnet sind, die zwei schlitzförmige, jeweils den Düsenbohrungsreihen 111 zugeordnete Mündungsöffnungen 16 bzw. 616 oder 716 aufweisen. Auch hier läßt sich eine Induktionsheizung anbringen, bei der die Induktionsspulen 3 bzw. 30 dann selbstverständlich in Reihe über dem Bereich angeordnet sind, über den sich das Spinndüsenpaket 1 erstreckt. Der Kurzschlußring 2 bzw. 22 ist in diesem Falle nicht als Ring, sondern in Reihe zu den Düsenbohrungen 111 angeordnet. Die Wirkungsweise ist im übrigen dieselbe wie bereits oben für die ringförmige Anordnung beschrieben.

Die lineare Anordnung hat den Vorteil, daß bei Luftzuführung von unten keine Schwert- oder sonstige Teilung durch die Blasluftzuführung erforderlich ist. Die Blasluft L kann zwischen den aus den Düsenbohrungen 111 austretenden Filamentscharen 9 zugeführt werden. Ebenso ist eine Zuführung der Blasluft L sowohl von oben als auch von unten möglich, wie für die ringförmige Anordnung gemäß Fig. 8 bereits beschrieben.

**Patentansprüche**

1. Vorrichtung zum Extrudieren eines geschmolzenen polymeren Materials zu einer Vielzahl von Fäden, wobei diese Vorrichtung Verteilerkanäle (41) aufweist, über die das geschmolzene Material Spinndüsen (111) zugeführt wird, sowie Heizeinrichtungen, um den Materialfluß bis zum Austritt aus den Spinndüsen (111) auf der für das Extrudieren erforderlichen Temperatur zu halten, ferner eine Kühleinrichtung mit einer den Spinndüsen (111) zugeordneten Blasdüse (70, 600, 700), die eine schlitzförmige Mündungsöffnung (16, 616, 716) aufweist, die auf die aus den Spinndüsen (111) austretenden Fäden (9) gerichtet ist, sodaß diese der aus der Blasdüse (70, 600, 700) austretenden Luftströmung ausgesetzt sind, die die Fadenschar (9) durchströmt, **dadurch gekennzeichnet, daß** die Blasdüse (70; 600; 700) unmittelbar vor ihrer Mündungsöffnung (16; 616; 716) eine Krümmung (61; 610; 710) aufweist, durch die die Luftströmung zum Austritt der Fäden (9) aus den Spinndüsen (111) hingelenkt wird, wobei der Scheitel der Krümmung (61) auf der den Spinndüsen (111) abgelegenen Seite liegt, so daß die an der Außenseite der Krümmung strömende Luft eine erhöhte Geschwindigkeit gegenüber der an der Innenseite strömenden Luft erhält.

2. Vorrichtung nach Anspruch 1, **dadurch gekennzeichnet, daß** dieser Krümmung (61; 710) eine zweite Krümmung (71; 720) in entgegengesetzter Richtung vorgeschaltet ist.

3. Vorrichtung nach Anspruch 2, **dadurch gekennzeichnet, daß** der Scheitel der vorgeschalteten zweiten Krümmung (71; 720) oberhalb der Spinndüsenebene (E) liegt.

4. Vorrichtung nach einem oder mehreren der vorstehenden Ansprüche, **dadurch gekennzeichnet, daß** der Krümmungswinkel ($\alpha$) nicht größer als 90° ist.

5. Vorrichtung nach einem oder mehreren der vorstehenden Ansprüche, **dadurch gekennzeichnet, daß** die Länge des auf die Krümmung (61; 610; 710) folgenden Abschnittes bis zur Mündungsöffnung (16; 616; 716) etwa das zwei- bis vierfache des Höhenabstandes (H) des Querschnittes der Mündungsöffnung (16; 616; 716) beträgt.

6. Vorrichtung nach einem oder mehreren der vorstehenden Ansprüche, **dadurch gekennzeichnet, daß** der Krümmung (610; 710) eine Verengung (605; 705) vorgeschaltet ist, deren Querschnitt einen geringeren Höhenabstand (h) als der Querschnitt der Mündungsöffnung (616; 716) aufweist.

7. Vorrichtung nach Anspruch 6, **dadurch gekennzeichnet, daß** der ersten Krümmung (61; 710) eine zweite Krümmung (71; 720) in entgegengesetzter Richtung vorgeschaltet ist, wobei die Verengung (705) zwischen der ersten (61; 710) und der zweiten Krümmung (71; 720) angeordnet ist.

8. Vorrichtung nach einem oder mehreren der vorstehenden Ansprüche, **dadurch gekennzeichnet, daß** die Krümmung (610) winkelförmig ausgebildet ist.

9. Vorrichtung nach einem oder mehreren der vorstehenden Ansprüche, **dadurch gekennzeichnet, daß** die Blasdüse ein Oberteil und ein Unterteil aufweist, wobei das Oberteil (607) und das Unterteil (606) tellerförmig ausgebildet sind, und die Verengung (605) durch den Abstand zwischen Ober- (607) und Unterteil (606) gebildet wird.

10. Vorrichtung nach einem oder mehreren der vorstehenden Ansprüche, **dadurch gekennzeichnet, daß** die Größe der Mündungsöffnung (16; 616; 716) der Blasdüse (70; 600; 700) einstellbar ist.

11. Vorrichtung nach Anspruch 10, **dadurch gekennzeichnet, daß** zur Verstellung der Größe der Mündungsöffnung (16; 616; 716) das Oberteil (7; 607; 707) und/oder das Unterteil (6; 606; 706) gegeneinander verstellbar sind.

12. Vorrichtung nach einem oder mehreren der vorstehenden Ansprüche, **dadurch gekennzeichnet, daß** die Mündungsöffnung (16; 616; 716) mit einem Strömungswinkel ($\beta$) von 10° - 30°, vorzugsweise von 20° - 25° gegen die Austrittsöffnungen (111) der Fäden (9) gerichtet ist.

13. Vorrichtung nach einem oder mehreren der vorstehenden Ansprüche, **dadurch gekennzeichnet, daß** die Spinndüsen (111) kreisförmig angeordnet sind und die Blasdüse (70; 600; 700) eine ringförmige Mündungsöffnung (16; 616; 716) aufweist, die konzentrisch innerhalb des Kreises der Spinndüsen (111) angeordnet ist, sodaß die Luftströmung gegen die aus den Spinndüsen (111) austretenden Fäden (9) von innen nach außen gerichtet ist.

14. Vorrichtung nach einem oder mehreren der vorstehenden Ansprüche, **dadurch gekennzeichnet, daß** die Spinndüsen (111) in zwei Reihen symmetrisch zur Blasdüse (70; 600; 700) angeordnet sind, die zwei schlitzförmige, jeweils den Spinndüsenreihen (111) zugeordnete Mündungsöffnungen (16; 616; 716) aufweist.

15. Vorrichtung nach einem oder mehreren der vorstehenden Ansprüche, **dadurch gekennzeichnet, daß** die Luftzuführung zur Blasdüse (70; 600; 700) über eine Rohrleitung (8) von unterhalb der Spinndüsen (111) erfolgt.

16. Vorrichtung nach den Ansprüchen 14 und 15, **dadurch gekennzeichnet, daß** die Rohrleitung (8) koaxial und zentrisch zur Blasdüse (70; 600; 700) angeordnet ist.

17. Vorrichtung nach einem oder mehreren der vorstehenden Ansprüche, **dadurch gekennzeichnet, daß** Sprühdüsen (81) innerhalb der Kühlluftströmung angeordnet sind.

18. Vorrichtung nach einem oder mehreren der vorstehenden Ansprüche, **dadurch gekennzeichnet,**

**daß** den Spinndüsen (111) eine Induktionsheizung zugeordnet ist, bei welcher Induktionsspulen (3; 30) über den Bereich angeordnet sind, über den sich die Spinndüsen (111) erstrecken.

19. Vorrichtung nach Anspruch 18, **dadurch gekennzeichnet, daß** die Induktionsspule (3; 30) einen hufeisenförmigen Eisenkern (32;33) aufweist.

20. Vorrichtung nach einem der Ansprüche 18 oder 19, **dadurch gekennzeichnet, daß** die Induktionsheizung einen Kurzschlußring (2; 22) aufweist, über dessen Umfang verteilt Induktionsspulen (3; 30) angeordnet sind.

21. Vorrichtung nach einem der Ansprüche 18 bis 20, **dadurch gekennzeichnet, daß** der Kurzschlußring (2; 22) in einer Ausnehmung des Düsenpaketes (1) angeordnet ist.

22. Vorrichtung nach einem der Ansprüche 20 oder 21, **dadurch gekennzeichnet, daß** der Kurzschlußring (2; 22) abgedeckt ist.

23. Vorrichtung nach einem oder mehreren der Ansprüche 18 bis 22, **dadurch gekennzeichnet, daß** mehrere Kurzschlußringe (22) nebeneinander angeordnet sind.

24. Vorrichtung nach einem oder mehreren der Ansprüche 18 bis 23, **dadurch gekennzeichnet, daß** das Spinndüsenpaket (1) in Heizzonen unterteilt ist.

25. Vorrichtung nach einem oder mehreren der Ansprüche 18 bis 24, **dadurch gekennzeichnet, daß** eine Schalteinrichtung (35) und Temperaturfühler zum gesteuerten Zu- und Abschalten der Induktionsspulen (3; 30) vorgesehen sind.

26. Vorrichtung nach einem der Ansprüche 24 oder 25, **dadurch gekennzeichnet, daß** jeder Heizzone ein Temperaturfühler und eine Schalteinrichtung (35) zugeordnet sind.

27. Vorrichtung nach einem oder mehreren der Ansprüche 22 bis 26, **dadurch gekennzeichnet, daß** jeder Induktionsspule (3; 30) ein Temperaturfühler und eine Schalteinrichtung (35) zugeordnet sind, so daß jede Induktionsspule (3; 30) einzeln temperaturgesteuert zu- und abschaltbar ist.

28. Vorrichtung nach einem oder mehreren der Ansprüche 18 bis 25, **dadurch gekennzeichnet, daß** die Schalteinrichtung (35) taktweise die Induktionsspulen (3; 33) zu- und abschaltet.

29. Vorrichtung nach einem oder mehreren der Ansprüche 18 bis 28, **dadurch gekennzeichnet, daß** einzelne Wicklungen (34) der Induktionsspulen (30) zu- und abschaltbar sind.

30. Vorrichtung nach einem oder mehreren der Ansprüche 18 - 29, **dadurch gekennzeichnet, daß** die über den Umfang des Düsenpaketes (1) angeordneten Induktionsspulen (3) phasengleich geschaltet sind.

**Claims**

1. An apparatus for extruding a molten polymeric material to form a multiplicity of threads wherein this apparatus has distribution channels (41) through which the molten material is fed to spinnerets (111), and heating devices to maintain the flow of material at a temperature required for extrusion until exiting from the spinnerets (111), further a cooling device with an air-blow nozzle (70, 600, 700) associated with the spinnerets (111) which has a slot-shaped mouth orifice (16, 616, 716) oriented to the threads exiting from the spinnerets (111) so that these are exposed to the air stream exiting from the air-blow nozzle (70, 600, 700) that flows through the sheet of threads (9), **characterized in that** the air-blow nozzle (70, 600, 700), directly in front of its mouth orifice (16, 616, 716), has a curvature (61; 610; 710) through which the air stream is directed to the exit of the threads (9) from the spinnerets (111) with the summit of the curvature (61) being located on the side proximal from the spinnerets (111) so that the air flowing at the outside of the curvature is given an increased velocity as compared the air flowing at the inside.

2. The apparatus according to claim 1, **characterized in that** said curvature (61; 710) is preceded by a second curvature (71; 720) in an opposite direction.

3. The apparatus according to claim 2, **characterized in that** said summit of said preceding second curvature(71; 720) is located above the spinneret plane (E).

4. The apparatus according to one or more of the preceding claims, **characterized in that** the angle of curvature ($\alpha$) does not exceed 90°.

5. The apparatus according to one or more of the preceding claims, **characterized in that** the length of the portion following said curvature (61; 610; 710) up to said mouth orifice (16, 616, 716) is about twice to four times the height distance (H) of the cross-section of said mouth orifice (16; 616; 716).

6. The apparatus according to one or more of the preceding claims, **characterized in that** said curvature (610; 710) is preceded by a constriction (605; 705) the cross-section of which has a height distance (h) which is smaller than the cross-section of said mouth orifice (16; 616; 716).

7. The apparatus according to claim 6, **characterized in that** said first curvature (61; 710) is preceded by a second curvature (71; 720) in an opposite direction wherein said constriction (705) is disposed between said first (61; 710) and said second curvature (71; 720).

8. The apparatus according to one or more of the preceding claims, **characterized in that** said curvature (610) is formed in an angular shape.

9. The apparatus according to one or more of the preceding claims, **characterized in that** said air-blow nozzle has an upper part and a lower part wherein the upper part (607) and the lower part (606) are formed in a dish-like shape and said constriction (605) is defined by the distance between wherein the upper part (607) and the lower part (606).

10. The apparatus according to one or more of the preceding claims, **characterized in that** the size of aid mouth orifice (16; 616; 716) of the air-blow nozzle (70; 600; 700) is adjustable.

11. The apparatus according to claim 10, **characterized in that** said upper part (7; 607; 707) and/or said lower part (6; 606; 706) can be regulated with respect to each other for a regulation of the size of said mouth orifice (16; 616; 716).

12. The apparatus according to one or more of the preceding claims, **characterized in that** said mouth orifice (16; 616; 716) is oriented against said exit orifices (111) of said threads (9) at a flow angle ($\beta$) of 10°- 30°, preferably 20° - 25°.

13. The apparatus according to one or more of the preceding claims, **characterized in that** said spinnerets (111) are circularly disposed and said air-blow nozzle (70, 600; 700) has an annular mouth orifice (16; 616; 716) which is concentrically disposed within the circle of said spinnerets (111) so that said air stream is directed against said threads (9) exiting from said spinnerets (111) from the inside to the outside.

14. The apparatus according to one or more of the preceding claims, **characterized in that** said spinnerets (111) are disposed in two rows and symmetrically with said air-blow-nozzle (70; 600; 700) which has two slot-shaped mouth orifices (16, 616; 716) each associated with the rows of said spinnerets (111).

15. The apparatus according to one or more of the preceding claims, **characterized in that** air is fed to said air-blow nozzle (70; 600; 700) from below said spinnerets (111) through a piping (8).

16. The apparatus according to claims 14 and 15, **characterized in that** said piping (8) is disposed coaxially and centrically to said air-blow nozzle (70; 600; 700)

17. The apparatus according to one or more of the preceding claims, **characterized in that** spray nozzles (81) are disposed within the flow of cooling air.

18. The apparatus according to one or more of the preceding claims, **characterized in that** the spinnerets (111) have associated therewith an induction heating in which induction coils (3; 30) are disposed above the area across which the spinnerets (111) extend.

19. The apparatus according to claim 18, **characterized in that** said induction coil (3; 30) has a horseshoe-shaped iron core (32; 33).

20. The apparatus according to any one of claims 18 or 19, **characterized in that** said induction heating has a short-circuiting ring (2; 22) over the circumference of which induction coils (3; 30) are disposed in a spaced relationship.

21. The apparatus according to any one of claims 18 to 20, **characterized in that** said short-circuiting ring (2; 22) is disposed in a recess of the spinning nozzle package (1).

22. The apparatus according to any one of claims 20 or 21, **characterized in that** said short-circuiting ring (2; 22) is covered.

23. The apparatus according to one or more of claims 18 to 22, **characterized in that** a plurality of short-circuiting ring (22) are disposed side by side.

24. The apparatus according to one or more of claims 18 to 23, **characterized in that** said spinning nozzle package (1) is divided into heating zones.

25. The apparatus according to one or more of claims 18 to 24, **characterized in that** a switching device (35) and temperature sensors are provided for a controlled connection and disconnection of said induction coils (3; 30).

26. The apparatus according to any one of claims 24 or 25, **characterized in that** each heating zone has associated therewith a temperature sensor and a switching device (35).

**27.** The apparatus according to one or more of claims 22 to 26, **characterized in that** each induction coil (3, 30) has associated therewith a temperature sensor and a switching device (35) so that each induction coil (3; 30) is individually connectable and disconnectable under a temperature control.

**28.** The apparatus according to one or more of claims 18 to 25, **characterized in that** said switching device (35) cyclically connects and disconnects said induction coils (3; 30).

**29.** The apparatus according to one or more of claims 18 to 28, **characterized in that** individual windings (34) of said induction coils (30) are connectable and disconnectable.

**30.** The apparatus according to one or more of claims 18 to 29, **characterized in that** said induction coils (3) disposed over said circumference of said spinning nozzle package (1) are connected in phase.

**Revendications**

**1.** Dispositif pour extruder une matière polymère fondue dans le but d'obtenir une multitude de fils, ce dispositif comportant des canaux (41) de distribution à travers desquels la matière fondue est amenée vers des filières (111), ainsi que des installations de chauffage destinées à maintenir le flux de matière à la température nécessaire à l'extrusion jusqu'à ce que celui-ci sorte des filières (111), de même qu'une installation de refroidissement comprenant une buse soufflante (70, 600, 700) affectée aux filières (111) et dont l'ouverture de la bouche est conçue en forme de fente (16, 616, 716) qui est dirigée vers les fils (9) sortant des filières (111) si bien que ceux-ci sont soumis au courant d'air sortant de la filière (70, 600, 700) et traversant la multitude de fils (9), **caractérisé en ce que** la buse soufflante (70 ; 600 ; 700) présente immédiatement avant l'ouverture de sa bouche (16 ; 616 ; 716) une courbure (61, 610 ; 710) par laquelle le courant d'air est dirigé vers la sortie des fils (9) hors des filières (111), le sommet de la courbure (61) étant situé au côté opposé aux filières (111) si bien qu'à l'air passant au côté extérieur de la courbure il est transféré une vitesse plus élevée par rapport à l'air passant au côté intérieur.

**2.** Dispositif selon la revendication 1, **caractérisé en ce qu'**en amont de cette courbure (61 ; 710) il est prévu une deuxième courbure (71 ; 720), en sens opposé.

**3.** Dispositif selon la revendication 2, **caractérisé en ce que** le sommet de la deuxième courbure (71 ; 720) prévue en amont est situé au-dessus du niveau (E) de la filière.

**4.** Dispositif selon l'une ou plusieurs des revendications précitées, **caractérisé en ce que** le rayon de courbure (V) n'est pas supérieur à 90°.

**5.** Dispositif selon l'une ou plusieurs des revendications précitées, **caractérisé en ce que** la longueur de la section suivant la courbure (61 ; 610 ; 710), jusqu'à l'ouverture de la bouche (16 ; 616 ; 716), est environ deux fois à quatre fois plus grande que la distance (H) de hauteur de la section de l'ouverture de la bouche (16 ; 616 ; 716).

**6.** Dispositif selon l'une ou plusieurs des revendications précitées, **caractérisé en ce qu'**en amont de la courbure (610 ; 710) il est prévu un rétrécissement (605 ; 705) dont la section présente une distance de hauteur (h) inférieure à celle de la section de l'ouverture de la bouche (616 ; 716).

**7.** Dispositif selon la revendication 6, **caractérisé en ce qu'**une deuxième courbure (71 ; 720) est prévue en amont de la première courbure (61 ; 710), en sens opposé, le rétrécissement (705) étant situé entre la première courbure (61 ; 710) et la deuxième courbure (71 ; 720).

**8.** Dispositif selon l'une ou plusieurs des revendications précitées, **caractérisé en ce que** la courbure (610) est conformée en équerre.

**9.** Dispositif selon l'une ou plusieurs des revendications précitées, **caractérisé en ce que** la buse soufflante comporte une partie supérieure et une partie inférieure, la partie supérieure (607) et la partie inférieure (606) ayant une conformation d'assiette et le rétrécissement (605) étant constitué par la distance entre la partie supérieure (607) et la partie inférieure (606).

**10.** Dispositif selon l'une ou plusieurs des revendications précitées; **caractérisé en ce que** l'ouverture de la bouche (16 ; 616 ; 716) de la buse soufflante (70 ; 600 ; 700) est réglable.

**11.** Dispositif selon la revendication 10, **caractérisé en ce que** la partie supérieure (7 ; 607 ; 707) et/ou la partie inférieure (6 ; 606 ; 706) sont réglables, l'une par rapport à l'autre, dans le but de changer l'ouverture de la bouche (16 ; 616 ; 716).

**12.** Dispositif selon l'une ou plusieurs des revendications précitées, **caractérisé en ce que** l'ouverture de la bouche (16 ; 616 ; 716) est dirigée vers les orifices (111) de sortie des fils (9), avec un angle du courant (ß) de 10° à 30°, de préférence de 20° à 25°.

**13.** Dispositif selon l'une ou plusieurs des revendications précitées, **caractérisé en ce que** les filières (111) sont disposées de façon circulaire et que la buse soufflante (70 ; 600 ; 700) présente une ouverture de bouche (16 ; 616 ; 716) annulaire qui est disposée de façon concentrique à l'intérieur du cercle des filières (111), si bien que le courant d'air vers les fils (9) sortant des filières (111) est dirigé depuis l'intérieur vers l'extérieur.

**14.** Dispositif selon l'une ou plusieurs des revendications précitées, **caractérisé en ce que** les filières (111) sont disposées en deux rangées de façon symétrique par rapport à la buse soufflante (70 ; 600 ; 700) qui comporte deux ouvertures de bouche (16 ; 616 ; 716) en forme de fente attribuées respectivement aux deux rangées de filières (111).

**15.** Dispositif selon l'une ou plusieurs des revendications précitées, **caractérisé en ce que** l'amenée d'air vers la buse soufflante (70 ; 600 ; 700) est effectuée par l'intermédiaire d'une conduite (8), par au-dessous des filières (111).

**16.** Dispositif selon les revendications 14 et 15, **caractérisé en ce que** la conduite (8) est disposée de façon coaxiale et centrée par rapport à la buse soufflante (70 ; 600 ; 700).

**17.** Dispositif selon l'une ou plusieurs des revendications précitées, **caractérisé en ce que** des buses de pulvérisation (81) sont disposées au sein du courant d'air de refroidissement.

**18.** Dispositif selon l'une ou plusieurs des revendications précitées, **caractérisé en ce qu'**aux filières (111) il est affecté un chauffage par induction dans lequel des bobines d'inductance (3 ; 30) sont disposés par-dessus le domaine dans lequel s'étendent les filières (111).

**19.** Dispositif selon la revendication 18, **caractérisé en ce que** la bobine d'inductance (3 ; 30) comporte un noyau en fer (32 ;33) en forme de fer à cheval.

**20.** Dispositif selon l'une des revendications 18 ou 19, **caractérisé en ce que** le chauffage par induction comporte une bague court-circuitée (2 ; 22), sur le pourtour de laquelle des bobines d'inductance (3 ; 30) sont réparties.

**21.** Dispositif selon l'une des revendications 18 à 20, **caractérisé en ce que** la bague court-circuitée (2 ; 22) est disposée dans un creux du bloc (1) de filières.

**22.** Dispositif selon l'une des revendications 20 ou 21, **caractérisé en ce que** la bague court-circuitée (2 ; 22) est recouverte.

**23.** Dispositif selon l'une ou plusieurs des revendications 18 à 22, **caractérisé en ce que** plusieurs bagues court-circuitées (22) sont disposées l'une à côté de l'autre.

**24.** Dispositif selon l'une ou plusieurs des revendications 18 à 23, **caractérisé en ce que** le bloc (1) de filières est divisé en zones de chauffage.

**25.** Dispositif selon l'une ou plusieurs des revendications 18 à 24, **caractérisé en ce qu'**un mécanisme de couplage (35) et des sondes de température sont prévus pour la mise en circuit et la coupure commandées des bobines d'inductance (3 ; 30).

**26.** Dispositif selon l'une des revendications 24 ou 25, **caractérisé en ce qu'**à chaque zone de chauffage il est attribué une sonde de température et un mécanisme de couplage (35).

**27.** Dispositif selon l'une ou plusieurs des revendications 22 à 26, **caractérisé en ce qu'**à chaque bobine d'inductance (3 ; 30) il est attribué une sonde de température et un mécanisme de couplage (35) si bien que chaque bobine d'inductance (3 ; 30) est susceptible d'être mise en circuit et déclenchée individuellement par une commande thermique.

**28.** Dispositif selon l'une ou plusieurs des revendications 18 à 25, **caractérisé en ce que** le mécanisme de couplage (35) met en circuit et met hors circuit par cycles les bobines d'inductance (3 ; 33).

**29.** Dispositif selon l'une ou plusieurs des revendications 18 à 28, **caractérisé en ce que** des enroulements (34) individuels des bobines d'inductance (30) sont susceptibles d'être mis en circuit et hors circuit.

**30.** Dispositif selon l'une ou plusieurs des revendications 18 à 29, **caractérisé en ce que** les bobines d'inductance (3) disposées sur le pourtour du bloc (1) de filières sont couplées en coïncidence de phases.

# FIG.1

## FIG. 2

## FIG. 3

# FIG.4

## FIG.5

## FIG.6

## FIG.7

# FIG.8

## FIG.9

## FIG.10

## FIG.11

FIG.12

FIG.13